Europäisches Patentamt

European Patent Office

Office européen des brevets

(11) Veröffentlichungsnummer: **0 303 178**
**A2**

(12) # EUROPÄISCHE PATENTANMELDUNG

(21) Anmeldenummer: **88112669.2**

(22) Anmeldetag: **04.08.88**

(51) Int. Cl.⁴: **G11B 5/84**

(30) Priorität: **08.08.87 DE 3726464**

(43) Veröffentlichungstag der Anmeldung:
**15.02.89 Patentblatt 89/07**

(84) Benannte Vertragsstaaten:
**BE DE FR GB IT NL**

(71) Anmelder: **BASF Aktiengesellschaft**
**Carl-Bosch-Strasse 38**
**D-6700 Ludwigshafen(DE)**

(72) Erfinder: **Werner, Arend, Dr.**
**Kurbrunnenstrasse 26**
**D-6702 Bad Duerkheim(DE)**
Erfinder: **Hibst, Hartmut, Dr.**
**Sternstrasse 215**
**D-6700 Ludwigshafen(DE)**
Erfinder: **Haedicke, Erich, Dr.**
**Pferchweg 2 b**
**D-6945 Hirschberg(DE)**
Erfinder: **Kronenbitter, Johann, Dr.**
**Struvestrasse 1**
**D-6900 Heidelberg(DE)**

(54) **Verfahren zur Herstellung magnetischer Aufzeichnungsträger.**

(57) Die Erfindung betrifft ein Verfahren zur Herstellung magnetischer Aufzeichnungsträger, im wesentlichen bestehend aus einem scheibenförmigen Aluminiumsubstrat, einer unmagnetischen (Ni-P)-Unterschicht, einer Chrom-haltigen Zwischenschicht sowie einer ferromagnetischen Metallschicht, wobei die Oberfläche der (Ni-P)-Unterschicht durch RF-Sputterätzen gereinigt und anschließend oxidiert wird.

EP 0 303 178 A2

## Verfahren zur Herstellung magnetischer Aufzeichnungsträger

Die Erfindung betrifft ein Verfahren zur Herstellung magnetischer Aufzeichnungsträger, im wesentlichen bestehend aus einem scheibenförmigen Aluminiumsubstrat, einer unmagnetischen (Ni-P)-Unterschicht, einer darauf aufgebrachten Chromhaltigen Zwischenschicht sowie einer ferromagnetischen Metallschicht mit verbesserter Haftung zwischen Substrat und Magnetschicht bei gleichzeitig hervorragenden magnetischen Eigenschaften.

Magnetische Aufzeichnungsträger bestehen zur Zeit üblicherweise aus einem Trägermaterial, das mit einer Dispersion, im wesentlichen bestehend aus einem organischen Bindemittel und magnetischen Teilchen, beschichtet ist. Im Falle von Magnetplatten erfolgt die Beschichtung durch Spincoaten. Die weitere Entwicklung der elektronischen Datenverarbeitung erfordert Aufzeichnungsträger mit steigender Speicherdichte. Diese Anforderungen können durch die pigmentierten Magnetschichten nur noch bedingt erfüllt werden.

Kohärente dünne Schichten aus magnetischem Material, vorzugsweise Metalllegierungen, bieten sich aufgrund ihrer physikalischen Eigenschaften als Speichermedium mit deutlich erhöhter Speicherdichte an. Diese Schichten werden bevorzugt durch chemische Abscheidung (Plating), bzw. durch PVD-Verfahren, wie Kathodenzerstäubung (Sputtern) und Aufdampfen hergestellt. Dabei kann es sich um Einfachschichten handeln, wie im Falle von Co-P (Plating) oder $\gamma$-Fe$_2$O$_3$ und Co-Pt (Sputtern). Gebräuchlich sind aber auch Mehrfachschichtsysteme, die z.B. aus einer nichtmagnetischen Unterschicht (Bi, Cr, u.a.) und der darauf aufgebrachten Magnetschicht (üblicherweise Co-Legierungen, wie z.B. Co-Ni, Co-Cr, Co-Ni-Cr u.a.) bestehen. Diese Mehrfachschichten werden bekanntermaßen durch einen Sputterprozeß erzeugt (EP-A-0 205 239, EP-A-0 183 120, EP-A-0 145 157). Um die Korrosionsstabilität und die Reibungseigenschaften dieser Schichten zu verbessern, werden üblicherweise die Magnetschichten mit einer Schutzschicht versehen. Stellvertretend hierfür sei die aufgesputterte Kohlenstoff-Schicht erwähnt. Die Schichtdicken betragen typischerweise für die Unterschicht 100 bis 400 nm, für die Magnetschicht 30 bis 100 nm und für die Schutzschicht 20 bis 100 nm.

Bei den bekannten scheibenförmigen Aufzeichnungsträgern, welche eine ferromagnetische Metallschicht als Magnetschicht aufweisen, bestehen die Substrate im allgemeinen aus Aluminium oder Aluminium-Legierungen. Zur Herstellung dieser Dünnschicht-Magnetplatten werden Aluminium-Substrate in einem ersten Schritt auf chemischem Wege mit einer etwa 20 $\mu$m dicken, harten und

unmagnetischen amorphen (Ni-P)-Unterschicht mit einem P-Gehalt von 15 bis 20 Atom-% beschichtet, wobei kleine Substratdefekte ausgeglichen werden können. Die hohe Härte der Unterschicht verbessert die tribologischen Eigenschaften der Magnetplatte und ermöglicht in einem sich anschließenden Oberflächenbearbeitungsschritt die Einstellung einer definierten Oberflächenrauhigkeit, die für ein reproduzierbares Flugverhalten des Magnetkopfes erforderlich ist und ein Festkleben (Sticking) des Magnetkopfes auf der Magnetplatte verhindert. Die Oberfläche der (Ni-P)-Schicht wird nach der Politur bzw. nach der Texturierung einer Reihe von chemischen und mechanischen Reinigungsschritten unterzogen, um Abrieb und Reste des Schleifmittels zu entfernen. Speziell im Falle der texturierten Substrate verbleiben aber geringe Spuren von Oberflächenbelegungen, die zu einer schlechten Haftung zwischen der aufgesputterten Chrom-Zwischenschicht und dem Al/(Ni-P)-Substrat führen und so durch Defekte einen unerwünscht hohen Ausschuß bedingen.

Es ist außerdem bekannt, daß die Haftfestigkeit von Schichten mittels Sputterätztechnik verbessert werden kann. Hierzu wird das Substrat als Kathode geschaltet und dann der Oberflächenbelag abgetragen, ohne daß das Substrat selbst angeätzt wird. Um auch oxidische Beläge sicher zu entfernen, muß die RF-Sputtertechnik angewandt werden.

In der US-A-4 552 820 wird ein magnetisches Aufzeichnungsmedium mit aufgesputtertem Schichtsystem bestehend aus einer Cr-Unterschicht, einer (Co-Cr)-Magnetschicht und einer C-Schutzschicht beschrieben. Als Substrat wird eine Al-Platte mit einer aufgesputterten (Ni-V)-Schicht verwendet. Das Aufsputtern von (Ni-V)-Schichten ergibt eine saubere Oberfläche, wodurch ohne zusätzliche Reinigung eine gute Haftung zum Schichtsystem gewährleistet wird. Ferner wird angegeben, daß die zusätzliche Oxidation der Oberfläche der (Ni-V)-Schicht eine Verringerung der Modulation der relativen Remanenz entlang einer Aufzeichnungsspur bewirkt. Nachteilig ist der hohe Zeitaufwand zum Aufbringen einer mehrere $\mu$m dicken (Ni-V)-Schicht durch Sputtern und die daraus resultierenden hohen Herstellungskosten. Zudem ist von Nachteil, daß bei diesem Verfahren keine Textur der (Ni-V)-Oberfläche vorgenommen werden kann, da diese die gesputterte saubere Oberfläche zerstören würde. Dies bedingt aber ein Sticking des Magnetkopfes.

Es bestand daher die Aufgabe, ein Verfahren zur Herstellung magnetischer Aufzeichnungsträger, welche im wesentlichen aus einem scheibenförmigen Aluminiumsubstrat, einer unmagnetischen (Ni-P)-Unterschicht, einer Chromhaltigen Zwischenschicht und einer ferromagnetischen Metallschicht bestehen, derart auszugestalten, daß die Haftfestigkeit der Schichten mit dem Substrat verbessert wird bei gleichzeitig hervorragenden magnetischen Eigenschaften.

Es wurde nun gefunden, daß die gestellte Aufgabe gelöst werden kann, wenn bei der Herstellung der eingangs bezeichneten magnetischen Aufzeichnungsträger die Oberfläche der (Ni-P)-Unterschicht durch RF-Sputterätzen gereinigt, anschließend oxidiert und daraufhin mit der Chrom-haltigen Zwischenschicht und schließlich mit der ferromagnetischen Metallschicht versehen wird.

Nach dem erfindungsgemäßen Verfahren werden die in bekannter Weise mit einer unmagnetischen amorphen (Ni-P)-Unterschicht versehen Aluminiumsubstrate durch RF-Sputerätzen oberflächlich gereinigt. Gereinigt im Sinne der Erfindung heißt, daß von der (Ni-P)-Schichtoberfläche 1 bis 20, vorzugsweise 3 bis 10 nm abgetragen werden, d.h. nicht nur oberflächliche Verunreinigungen sondern unmittelbar Schichtmaterial abgetragen wird. Diese neugebildete Oberflächenzone wird nun mit einem sauerstoffhaltigen Gasgemisch oxidiert. Dies läßt sich dadurch bewerkstelligen, daß das Substrat mit der sputtergeätzten Oberfläche aus der Apparatur ausgeschleust und zwischen 10 Sekunden und 12 Stunden, vorzugsweise kurzfristig während 60 bis 300 s an Luft oder einem sauerstoffhaltigen Gasgemisch gelagert wird.

Nach der Präparation der (Ni-P)-Unterschichtoberfläche wird darauf eine Chrom-haltige Zwischenschicht aufgebracht. Dies geschieht beispielsweise dadurch, daß im DC-Magnetronmode Chrom bei einem Argon-Druck zwischen $5 \cdot 10^{-4}$ und $5 \cdot 10^{2-}$ mbar aufgesputtert wird.

Anstatt einer Chrom-haltigen Zwischenschicht lassen sich zur Herstellung dieser Zwischenschichten in gleich geeigneter Weise die Elemente Wismut, Gold, Molybdän, Tantal oder Wolfram bzw. Legierungen dieser Materialien heranziehen.

Im Anschluß an das Aufbringen der Zwischenschicht wird die ferromagnetische Metallschicht erzeugt und gegebenenfalls eine Schutzschicht darüber aufgebracht. Sowohl die Metallschicht als auch die Schutzschicht werden üblicherweise durch Sputtern im DC-Magnetronmode erzeugt.

Eine andere vorteilhafte Ausgestaltung dieses erfindungsgemäßen Verfahrensschritts der oberflächlichen Oxidation der (Ni-P)-Schichtoberfläche besteht darin, daß das RF-Sputterätzen der (Ni-P)-Oberfläche in einem Gemisch aus Argon und Sauerstoff erfolgt. Die im Plasma erzeugten Sauerstofffionen werden auf das Substrat beschleunigt und oxidieren so die frisch abgesputterte (Ni-P)-Oberfläche. Dabei hat sich ein Sauerstoffanteil von 5 bis 90, insbesondere von 20 bis 50 Vol.% des Argonanteils als zweckmäßig herausgestellt. Bei der Durchführung der auf diese Weise vorgenommenen Oxidation ist es empfehlenswert, den Sauerstoffanteil während des Sputerätzens kontinuierlich zu ändern und zwar so, daß zu Beginn des Sputterns reines Argon vorhanden ist und am Ende des Ätzvorgangs der Sauerstoffanteil 5 bis 100, vorzugsweise 20 bis 100 Vol.% beträgt.

In einer anderen zweckmäßigen Ausgestaltung des erfindungsgemäßen Verfahrens wird die durch Sputterätzen gereinigte (Ni-P)-Oberfläche vor der Beschichtung mit Chrom nicht ausschließlich oxidiert, sondern bei der Herstellung der Chrom-haltigen Zwischenschicht zu Beginn des Aufwachsens dieser Schicht dem Argon-Sputtergas Sauerstoff zugeben. Durch dieses reaktive Sputtern bildet sich eine sauerstoffhaltige Chrom-Zwischenschicht, im folgenden (Cr-O)-Zwischenschicht genannt, die das Auftreten der (110)-Textur in der anschließend aufgebrachten reinen Chrom-Zwischenschicht verhindert, sofern die (Cr-O)-Zwischenschicht mindestens 3 nm dick ist und der Sauerstoffgehalt 6 bis 60 Atom-% beträgt. Außerdem darf die Dicke der (Cr-O)-Zwischenschicht 95 % der Gesamtdicke der Chrom-haltigen Zwischenschichten nicht übersteigen. Das anschließende Aufbringen der ferromagnetischen Metallschicht und gegebenenfalls einer Schutzschicht erfolgt in der bekannten Weise.

Mit dem erfindungsgemäßen Verfahren lassen sich magnetische Aufzeichnungsträger vom Typ der starren Dünnschichtmagnetplatten herstellen, die sich gegenüber dem Stand der Technik durch eine verbesserte Haftung zwischen Substrat und Magnetschicht auszeichnen und dennoch sehr gute magnetische Eigenschaften, insbesondere die geforderten hohen Werte für die Koerzitivfeldstärke aufweisen. Dies stellt eine deutliche Verbesserung gegenüber der üblichen Vorgehensweise dar, bei der durch Erhitzen der (Ni-P)-Oberfläche im Vakuum oder durch Sputterätzen lediglich die Oberflächenbelegung mehr oder weniger gut von den Substraten entfernt wird, wodurch noch keine optimale Haftfestigkeit der anschließend aufgebrachten Chrom-Zwischenschicht sichergestellt ist. Eine intensive Reinigung durch RF-Sputterätzen, bei der neben der Oberflächenbelegung auch Material der Oberfläche selbst abgetragen wird, bewirkt allein zwar eine gute Haftfestigkeit der Chrom-Zwischenschicht auf der (Ni-P)-Oberfläche, bedingt aber gleichzeitig, daß die Koerzitivfeldstärke gegenüber Proben mit ungeätzten Substraten deutlich erniedrigt wird. Mit Hilfe der Röntgentexturanalyse konnte nachgewiesen werden, daß die auf sauerstofffreien bzw. sauerstoffarmen (Ni-P)-Oberflächen aufgesputterten Chrom-Zwischenschichten statt der erwünschten isotropen Ausrichtung der Kristallite eine ungünstige, ausgeprägte (110)-Textur aufweisen, wodurch aufgrund der kristallographischen Kopplung zwischen Chrom-Zwischenschicht und aufgesputterter Magnetschicht die (110)-Textur der Unterschicht eine, die Abnahme der Koerzitivfeldstärke erklärende Textur der Magnetschicht bewirkt wird.

Die Erfindung sei anhand der folgenden Beispiele im Vergleich zu Versuchen gemäß der bekannten Vorgehensweise näher erläutert. Die an den Magnetschichten gemessene Koerzitivfelstärke $H_c$ in kA/m wurde mit einem Schwingmagnetometer bestimmt und die Haftfestigkeit wurde durch Abreißtests mit einer Klebefolie (adhesive tape test) untersucht.

## Vergleichsversuch 1

Mechanisch und chemisch gereinigte Al/(Ni-P)-Substrate wurden mit einer 200 nm dicken Chrom-Zwischenschicht und einer 100 nm dicken $Co_{80}Ni_{20}$-Magnetschicht versehen. Die Beschichtung erfolgte statisch im DC-Magnetronmode bei einem Ar-Druck von $5 \times 10^{-3}$ mbar, mit Sputterraten von 100 nm/min für Cr und 70 nm/min für $Co_{80}Ni_{20}$. Der Basisdruck war besser als $10^{-7}$ mbar und als Targets wurden vakuumgeschmolzene Materialien verwendet. Ohne Reinigung durch Sputterätzen wurden $H_c$-Werte von 30 kA/m erhalten. Die Schichten zeigen eine schlechte Haftfestigkeit. Die röntgenographische Untersuchung an der Chrom-Zwischenschicht ergab keine bevorzugte kristallographische Ausrichtung.

## Vergleichsversuch 2

Mechanisch und chemisch gereinigte Al/(Ni-P)-Substrate wurden RF-sputtergeätzt. Die Ätzzeit betrug 5 min und die Ätzrate 3 nm/min. Die wie in Vergleichsversuch 1 beschrieben aufgesputterte 200 nm dicke Chrom-Zwischenschicht zeigte eine ausgeprägte (110)-Textur der Kristallite. Die $H_c$ der wie in Vergleichsversuch 1 beschrieben aufgesputterten 100 nm dicken $Co_{80}Ni_{20}$-Schicht betrug nur noch 20 kA/m. Die Schichten zeigten eine gute Haftfestigkeit.

## Beispiel 1

Wie in Vergleichsversuch 2 beschrieben wurden Al/(Ni-P)-Substrate durch Sputterätzen gereinigt. Anschließend wurde das geäzte Substrat jedoch für 60 sec ausgeschleust und der Luft ausgesetzt. Die anschließend aufgebrachte Chrom-Schicht zeigte keine Röntgentextur und die $Co_{80}Ni_{20}$-Schicht wies $H_c$-Werte von 30 kA/m auf. Die Schichten zeigten eine gute Haftfestigkeit.

## Beispiel 2

Schichtherstellung und Substratvorbehandlung erfolgte wie in Beispiel 1 beschrieben, aber statt einer 100 nm dicken $Co_{80}Ni_{20}$-Schicht wurde eine nur 50 nm dicke Schicht aufgebracht. Die Reinigung der (Ni-P)-Oberfläche durch RF-Sputterätzen und anschließende Oxidation wie in Beispiel 1 beschrieben ergab einen $H_c$-Wert von 53 kA/m. Im Vergleich dazu wurde nur mit Sputterätzen allein, ohne anschließende Oxidation der (Ni-P)-Oberfläche ein $H_c$-Wert von nur 25 kA/m bestimmt. Die Schichten zeigten eine gute Haftfestigkeit.

## Beispiel 3

Die Schichtherstellung erfolgte wie in Beispiel 1 beschrieben, aber statt einer 100 nm dicken $Co_{80}Ni_{20}$-Schicht wurde eine 80 nm dicke $Co_{62,5}Ni_{30}Cr_{7,5}$-Schicht aufgebracht. Die Reinigung der (Ni-P)-Oberfläche durch RF-Sputterätzen und anschließende Oxidation wie in Beispiel 1 beschrieben ergab einen $H_c$-Wert von 62 kA/m. Im Vergleich dazu wurde nur mit Sputterätzen ohne anschließende Oxidation der gereinigten (Ni-P)-Oberfläche ein $H_c$-Wert von lediglich 38 kA/m bestimmt. Die Schichten zeigten eine gute Haftfestigkeit.

## Beispiel 4

Das Al/(Ni-P)-Substrat wurde 5 min RF-sputtergeätzt (Ätzrate 3 nm/min). Zu Beginn der Cr-Beschichtung wurde für 60 sec ein $O_2$-Partialdruck von $5 \times 10^{-5}$ mbar eingestellt, so daß die Unterschicht aus 100 nm Cr-O (8 Atom-% O) und 100 nm Cr bestand. Der so erreichte $H_c$-Wert einer 100 nm dicken $Co_{80}Ni_{20}$-Schicht betrug 30 kA/m. Die Schichten zeigten eine gute Haftfestigkeit.

## Ansprüche

1. Verfahren zur Herstellung magnetischer Aufzeichnungsträger, im wesentlichen bestehend aus einem scheibenförmigen Aluminiumsubstrat, einer unmagnetischen (Ni-P)-Unterschicht, einer Chromhaltigen Zwischenschicht sowie einer ferromagnetischen Metallschicht, dadurch gekennzeichnet, daß die Oberfläche der (Ni-P)-Unterschicht durch RF-Sputterätzen gereinigt, anschließend oxidiert und dann mit der Chrom-haltigen Zwischenschicht und der ferromagnetischen Metallschicht versehen wird.

2. Verfahren nach Anspruch 1, dadurch gekennzeichnet, daß der Abtrag durch das RF-Sputterätzen 1 bis 20 nm beträgt.

3. Verfahren nach Anspruch 1, dadurch gekennzeichnet, daß die Oxidation der geätzten (Ni-P)-Oberfläche des Substrats mit einem sauerstoffhaltigen Gasgemisch während 10 Sekunden bis 12 Stunden erfolgt.

4. Verfahren gemäß Anspruch 1, dadurch gekennzeichnet, daß die (Ni-P)-Oberfläche durch RF-Sputterätzen in einer Mischung aus Argon und Sauerstoff gereinigt und danach mit der Chrom-haltigen Zwischenschicht und der ferromagnetischen Metallschicht beschichtet wird.

5. Verfahren nach Anspruch 4, dadurch gekennzeichnet, daß der Sauerstoffanteil 5 bis 90 Vol.% des Argonanteils ausmacht.

6. Verfahren nach Anspruch 4, dadurch gekennzeichnet, daß der Sauerstoffanteil während des Ätzens kontinuierlich verändert wird.

7. Verfahren nach Anspruch 4, dadurch gekennzeichnet, daß zu Beginn des Ätzens reines Argon verwendet wird und am Ende des Ätzvorgangs der Sauerstoffanteil 5 bis 100 Vol.% beträgt.

8. Verfahren gemäß Anspruch 1, dadurch gekennzeichnet, daß die (Ni-P)-Oberfläche durch RF-Sputterätzen gereinigt, mit einer sauerstoffhaltigen Chrom-Zwischenschicht versehen und darauf nacheinander die Chrom-Zwischenschicht und die ferromagnetische Metallschicht abgeschieden werden.

9. Verfahren nach Anspruch 8, dadurch gekennzeichnet, daß die sauerstoffhaltige Chrom-Zwischenschichtdicke mindestens 3 nm und höchstens 95 % der Gesamtschichtdicke von sauerstoffhaltiger Chrom- und Chrom-Zwischenschicht beträgt.

10. Verfahren nach Anspruch 8, dadurch gekennzeichnet, daß die Sauerstoffkonzentration in der sauerstoffhaltigen Chrom-Schicht 6 bis 60 Atom-% beträgt.

11. Verfahren nach Anspruch 8, dadurch gekennzeichnet, daß beim Übergang von der sauerstoffhaltigen Chrom-Schicht zur Chrom-Schicht der Sauerstoffgehalt sich kontinuierlich ändert.